# EUROPEAN PATENT APPLICATION

(11) **EP 4 503 243 A1**
(43) Date of publication of application: **05.02.2025**
(21) Application number: 23780878.7
(22) Date of filing: 30.03.2023
(51) Int. Cl.: H01M 10/0587, H01M 4/134, H01M 4/38, H01M 4/66, H01M 10/052, H01M 50/434, H01M 50/443, H01M 50/446, H01M 50/451, H01M 50/463

(54) **LITHIUM SECONDARY BATTERY**

(30) Priority: 31.03.2022 JP 2022060717
(71) Applicant: Panasonic Intellectual Property Management Co., Ltd., Kadoma-shi, Osaka 571-0057 (JP)
(72) Inventor: UCHIYAMA Yohei, Kadoma-shi, Osaka 571-0057 (JP)
(74) Representative: Novagraaf International SA
(86) International application number: PCT/JP2023/013183
(87) International publication number: WO 2023/190870

(57) **Abstract**

A lithium secondary battery includes: a wound electrode group including a positive electrode, a negative electrode including a negative electrode current collector, and a separator disposed between the positive electrode and the negative electrode; a core member disposed in a hollow part of the electrode group; and a non-aqueous electrolyte having lithium ion conductivity. Lithium metal is deposited on the negative electrode when the battery is charged, and the lithium metal dissolves when the battery is discharged. The negative electrode current collector is an austenitic stainless steel foil or an oxygen-free copper foil.

## Description

### [Technical Field]

The present disclosure relates to a lithium secondary battery.

### [Background Art]

A lithium secondary battery (lithium metal secondary battery) includes a wound electrode group and a non-aqueous electrolyte. The wound electrode group is obtained by spirally winding a positive electrode and a negative electrode including a negative electrode current collector with a separator disposed between the positive electrode and the negative electrode. In the lithium secondary battery, lithium metal is deposited on the negative electrode when the battery is charged, and the lithium metal dissolves and is released as lithium ions into the non-aqueous electrolyte when the battery is discharged.

PTL 1 proposes a cylindrical lithium ion battery obtained by winding a positive electrode plate and a negative electrode plate around a core with a separator disposed between the positive electrode plate and the negative electrode plate to form a wound group, and housing the wound group in a cylindrical battery case, wherein the wound group includes two sets of two separators disposed between the positive electrode plate and the negative electrode plate, leading end portions of the two separators are joined through plastic welding, and the joined leading end portions of the two sets of separators are joined to different positions on the core.

### [Citation List]

### [Patent Literature]

PTL 1: Japanese Laid-Open Patent Publication No. 2001-229970

### [Summary of Invention]

### [Technical Problem]

There is demand for lithium secondary batteries having improved cycle characteristics. When the core described in PTL 1 is disposed in a hollow part of a wound electrode group included in a lithium secondary battery, it is possible to suppress buckling of electrodes, breakage of the electrodes, and the like due to deformation of the electrodes in the vicinity of the hollow part of the electrode group during charging and discharging. However, the cycle characteristics are still insufficient.

### [Solution to Problem]

An aspect of the present disclosure relates to a lithium secondary battery including: a wound electrode group including a positive electrode, a negative electrode including a negative electrode current collector, and a separator disposed between the positive electrode and the negative electrode; a core member disposed in a hollow part of the electrode group; and a non-aqueous electrolyte having lithium ion conductivity, wherein lithium metal is deposited on the negative electrode when the battery is charged, and the lithium metal dissolves when the battery is discharged, and the negative electrode current collector is an austenitic stainless steel foil or an oxygen-free copper foil.

### [Advantageous Effects of Invention]

According to the present disclosure, it is possible to improve the cycle characteristics of a lithium secondary battery.

While novel features of the present invention are set forth in the appended claims, both the configuration and content of the present invention, as well as other objects and features of the present invention, will be better understood from the following detailed description given with reference to the drawings.

### [Brief Description of Drawings]

FIG. 1 is a schematic longitudinal cross-sectional view of a lithium secondary battery according to an embodiment of the present disclosure.
FIG. 2 is a schematic diagram showing an example of a configuration of an electrode group.
FIG. 3 is a schematic diagram showing another example of the configuration of the electrode group.
FIG. 4(a) is a top view showing an example of a first substrate and a negative electrode placed on the first substrate. FIG. 4(b) is a top view showing an example of a negative electrode composite body.
FIG. 5(a) is a top view showing an example of a second substrate and a positive electrode placed on the second substrate. FIG. 5(b) is a top view showing an example of a positive electrode composite body.
FIG. 6 is a top view showing an example of a positive and negative electrode stack.
FIG. 7(a) is a top view showing an example of a first substrate including protrusions and a negative electrode placed on the first substrate. FIG. 7(b) is a top view showing another example of the negative electrode composite body.
FIG. 8 is a top view showing another example of the positive and negative electrode stack.
FIG. 9 is a top view showing an example of a positive electrode including protrusions.
FIG. 10 is a top view showing another example of the positive and negative electrode stack.

### [Description of Embodiments]

The following describes example embodiments of the present disclosure, but the present disclosure is not limited to the following examples. In the following description, specific numerical values and materials may be described as examples, but other numerical values and materials may also be applied as long as effects of the present disclosure can be obtained. In the present specification, the expression "a numerical value A to a numerical value B" includes the numerical value A and the numerical value B, and can be read as "the numerical value A or more and the numerical value B or less". In the following description, if lower and upper limits of numerical values regarding specific physical properties or conditions are exemplified, any of the exemplified lower limits and any of the exemplified upper limits can be combined as desired as long as the lower limit is not equal to or greater than the upper limit. When a plurality of materials are described as examples, a material selected from the materials may be used alone, or two or more of the materials may be used in combination.

A lithium secondary battery according to an embodiment of the present disclosure includes a wound electrode group and a non-aqueous electrolyte having lithium ion conductivity. The wound electrode group includes a positive electrode, a negative electrode including a negative electrode current collector, and a separator disposed between the positive electrode and the negative electrode. A core member is disposed in a hollow part of the electrode group. The negative electrode current collector is an austenitic stainless steel foil or an oxygen-free copper foil. In the following description, the wound electrode group including the core member disposed in the hollow part may also be referred to as the "electrode group including the core member".

The lithium secondary battery according to the present disclosure is also called a lithium metal secondary battery. Lithium metal is deposited on the negative electrode of this type of battery when the battery is charged, and the lithium metal dissolves when the battery is discharged. Specifically, the negative electrode includes at least the negative electrode current collector, and the lithium metal is deposited on the negative electrode current collector.

In the lithium secondary battery, for example, 70% or more of the rated capacity is realized by deposition and dissolution of lithium metal. Movement of electrons at the negative electrode during charging and discharging occurs mainly due to deposition of lithium metal on the negative electrode and dissolution of lithium metal from the negative electrode. Specifically, 70% to 100% (e.g., 80% to 100% or 90% to 100%) of the movement of electrons (from another standpoint, a current) at the negative electrode during charging and discharging occurs due to deposition and dissolution of lithium metal. That is to say, the negative electrode according to the present disclosure differs from a negative electrode at which movement of electrons during charging and discharging occurs mainly due to lithium ions being absorbed and released by a negative electrode active material (e.g., graphite).

In a battery in which lithium metal is deposited on the negative electrode when the battery is charged, the open circuit potential (OCV: Open Circuit Voltage) of the negative electrode in a fully-charged state is 70 mV or less with respect to lithium metal (lithium dissolution/deposition potential), for example. The fully-charged state is a state where the battery has been charged such that the SOC (State of Charge) is 0.98×C or more, where C represents the rated capacity of the battery, for example. The open circuit potential (OCV) of the negative electrode in the fully-charged state can be measured by disassembling the fully-charged battery in an argon atmosphere, taking out the negative electrode, and assembling a cell using lithium metal as a counter electrode. A non-aqueous electrolyte used in the cell may have the same composition as the non-aqueous electrolyte included in the disassembled battery.

In a conventional lithium secondary battery including a wound electrode group that has a hollow part, electrodes deform in the vicinity of the hollow part of the electrode group during charging and discharging, leading to buckling or breakage of the electrodes, for example. Particularly, the volume of the negative electrode significantly changes during charging and discharging, a large stress tends to be generated, and breakage or the like tends to occur. Also, when an electrodeposited copper foil or the like is used as the negative electrode current collector, the negative electrode breaks due to embrittlement of the negative electrode current collector during charging and discharging. For these reasons, the cycle characteristics deteriorate.

However, in the lithium secondary battery according to the present disclosure, the core member is disposed in the hollow part of the electrode group, and therefore, deformation of the electrodes (in particular, the negative electrode) in the vicinity of the hollow part of the electrode group is suppressed, and breakage or the like of the electrodes is suppressed. Also, the austenitic stainless steel foil or the oxygen-free copper foil is used as the negative electrode current collector, and therefore, embrittlement of the negative electrode current collector and resulting breakage of the negative electrode are suppressed.

When the core member is disposed in the hollow part of the electrode group and the austenitic stainless steel foil or the oxygen-free copper foil is used as the negative electrode current collector, the cycle characteristics are improved significantly. Breakage of the negative electrode is suppressed because the negative electrode current collector whose embrittlement is suppressed is used, and the shape of the electrode group is significantly stabilized because the core member is disposed. Accordingly, a surface pressure is stably applied to the entire electrode group when lithium metal is deposited on the negative electrode, and the generation of dendrites of the lithium metal is suppressed. Isolation of the lithium metal and an increase in a negative electrode resistance due to the generation of dendrites are suppressed, for example. The effect of a surface pressure being applied to the entire electrode group during charge-discharge cycles is likely to be obtained continuously and stably. It is supposed that consequently, a capacity retention rate during the cycles significantly increases.

The electrode group is usually in contact with an inner surface of a battery can during charging and discharging. An outer circumferential surface side and an inner circumferential surface side of the electrode group are fixed by the battery can and the core member, and therefore, the shape of the electrode group is further stabilized, and a surface pressure is likely to be more stably applied to the entire electrode group.

It is preferable that a thickness X of lithium metal deposited on the negative electrode when the battery is charged and a distance Y (hereinafter also referred to as an "inter-electrode distance Y") between the positive electrode and the negative electrode when the battery is discharged satisfy a relationship: Y/X>1.5. Note that the expression "when the battery is charged" as used here refers to a state where a large amount of lithium metal has been deposited on the negative electrode, such as a state where the SOC is 0.9×C or more, for example. The expression "when the battery is discharged" as used here refers to a state where a large amount of lithium metal has dissolved from the negative electrode, such as a state where the SOC is 0.1×C or less, for example. If lithium metal is present when the battery is discharged as well, the above-described thickness X can also be said to be a difference between a thickness of lithium metal when the battery is charged and a thickness of lithium metal when the battery is discharged. The inter-electrode distance Y can also be said to be the thickness of the separator between the positive electrode and the negative electrode when the battery is discharged. When the separator includes a plurality of substrates (or a substrate and protrusions), the thickness of the separator is a total thickness of the plurality of substrates (or the substrate and the protrusions).

When Y/X>1.5 is satisfied, stress generated by Li deposited during charging is likely to be mitigated by the separator disposed between the positive electrode and the negative electrode. In this case, the separator is appropriately pressed and compressed (e.g., voids in the separator become smaller in size) by the deposited Li, and therefore, stress generated by the deposited Li is likely to be mitigated. Moreover, in this case, a surface pressure is likely to be appropriately applied to the entire electrode group because the core member is disposed and the austenitic stainless steel foil or the oxygen-free copper foil is used as the negative electrode current collector, and the effect of suppressing the generation of dendrites is likely to be obtained.

Each of the positive electrode, the negative electrode, and the separator has an elongated sheet shape, for example. The electrode group including the core member is manufactured by winding the positive electrode and the negative electrode around the core member with the separator disposed between the positive electrode and the negative electrode, for example. The electrodes may be wound after the electrodes are placed on a substrate (or a substrate including protrusions) that constitutes the separator and fixed to the substrate, or after protrusions are provided on the electrodes, for example.

For example, it is preferable to dispose the core member at a predetermined position on a stack (a positive and negative electrode stack, which will be described later) including the positive electrode, the negative electrode, and the separator, fix the core member at the position, and then wind the stack. There is no particular limitation on the method for fixing the core member, and it is possible to fix the core member with a piece of tape or an adhesive, or through heat welding or ultrasonic welding, for example. In this case, the core member is fixed to an end portion of the electrode group from which the electrode group is wound, and the core member is fixedly disposed in the hollow part of the electrode group. In this case, the shape of the electrode group as a whole is further stabilized, and buckling and bending of the electrodes in the vicinity of the hollow part of the electrode group are remarkably suppressed. Also, a surface pressure is likely to be uniformly applied to the entire electrode group, the effect of suppressing the generation of dendrites of lithium metal is stably obtained, and the cycle characteristics are further improved.

Alternatively, the electrode group including the core member may be manufactured by winding the positive electrode and the negative electrode around a predetermined winding core with the separator disposed between the positive electrode and the negative electrode, removing the winding core to obtain an electrode group including a hollow part, and then inserting the core member into the hollow part of the electrode group. In this case, the core member is not fixed to the end portion of the electrode group from which the electrode group is wound, but the effect of stabilizing the shape of the electrode group can be obtained by disposing the core member.

### (Negative Electrode Current Collector)

The negative electrode current collector is an austenitic stainless steel foil or an oxygen-free copper foil. When the negative electrode current collector is an austenitic stainless steel foil, embrittlement of the negative electrode current collector is suppressed, and the negative electrode current collector has appropriate strength and flexibility and excellent resistance to stress generated in the negative electrode. Embrittlement of the negative electrode current collector is also suppressed when a copper foil having a small oxygen content is used. The thickness of the negative electrode current collector is not particularly limited, and is 5 µm or more and 300 µm or less, for example.

The austenitic stainless steel is stainless steel having an austenite percentage of 50% or more. The austenite percentage may be 70% or more, 90% or more, or 100%.

The austenite percentage indicates the proportion (mass ratio) of an austenite phase in the stainless steel. When amounts of the austenite phase, a ferrite phase, and a martensite phase contained in the stainless steel are represented by x, y, and z, respectively, the austenite percentage is calculated using the following formula: {x/(x+y+z)}×100. The austenite structure is a face-centered cubic structure (FCC structure), and the ferrite structure and the martensite structure are body-centered cubic structures (BCC structures).

The austenitic stainless steel may contain C, Si, Mn, P, S, Ni, Cr, Mn, Mo, Cu, N, etc., as components other than Fe, for example. The stainless steel may be low carbon stainless steel, extremely low carbon stainless steel, nitrogen-added stainless steel, or two-phase stainless steel containing austenite.

Examples of the austenitic stainless steel include SUS301, SUS302, SUS303, SUS304, SUS305, SUS309, SUS310, SUS312, SUS315, SUS316L, SUS317, SUS321, and SUS347. Among these, SUS304 and SUS316L are particularly preferable. The austenitic stainless steel is not limited to those listed above, and may also be stainless steel that is produced suitably using a melting method and has an austenite percentage of 50% or more. Also, the austenitic stainless steel foil may be a foil that is softened through annealing.

The austenite percentage can be determined using the following method.

A sample (e.g., size: 25 mm×25 mm) of the stainless steel foil is prepared, and X-ray diffraction (XRD) measurement is performed on the sample using a two-dimensional detection function to obtain an XRD pattern (vertical axis: X-ray diffraction intensity, horizontal axis: diffraction angle 2θ). The measurement region (micro region) has a size of 15 mm×15 mm, for example.

The following shows desirable XRD measurement conditions.

### <Analyzer>

Two-dimensional micro X-ray diffraction analyzer (RINT-RAPID II manufactured by Rigaku Corporation)

### <Analysis conditions>

Tube: Co
Monochromatization: use monochrometer (CoKα)
Tube output: 40 kV-30 mA
Detector: imaging plate (two-dimensional)
(Reflection method)
Collimator: Φ300 µm
ω angle: 25° to 35° (2°/sec)
Φ angle: 360° rotation (1°/sec)
Measurement time (exposure): 30 minutes

Fitting is performed on the obtained XRD pattern using the least squares method and a standard database, and then quantitative analysis is performed by performing Rietveld analysis. The XRD pattern may include a diffraction peak corresponding to at least one phase of the austenite phase, the ferrite phase, and the martensite phase. The analysis can be performed using software included in the analyzer. Through the analysis, the proportion (mass ratio) of the austenite phase to the sum of the austenite phase, the ferrite phase, and the martensite phase is determined as the austenite percentage. The austenite percentage is determined for each of several measurement regions selected in the sample, and an average value is calculated.

Alternatively, the austenite percentage can be estimated based on the Schaeffler diagram showing a relationship between ferrite stabilizer elements and austenite stabilizer elements and structures. The diagram indicates a structure ratio with two axes indicating the ferrite stabilizer elements and the austenite stabilizer elements. In the diagram, the vertical axis shows Ni equivalent and the horizontal axis shows Cr equivalent. The Cr equivalent is a value obtained by converting a degree of ferrite stabilizer elements to an amount of chromium and can be expressed as: Cr equivalent=%Cr+%Mo+1.5×%Si+0.5×%Nb. The Ni equivalent is a value obtained by converting a degree of austenite stabilizer elements to an amount of nickel and can be expressed as: Ni equivalent=%Ni+30×%C+0.5×%Mn.

Components of stainless steel can be analyzed in accordance with JIS G 0321 to perform quantitative analysis of the austenite stabilizer elements (Ni, Mn, C, etc.) and the ferrite stabilizer elements (Cr, Mo, Si, Nb).

The oxygen-free copper foil is a copper foil having an oxygen content of 50 ppm or less. The oxygen content may be 30 ppm or less, or 15 ppm or less. Note that the oxygen content is the amount of oxygen contained in the base material excluding an oxide film covering the surface of the copper foil.

The oxygen-free copper foil may also contain a trace amount of components other than copper (e.g., Ni, Cr, Fe, Zn, Sn, Ag, Pb, Bi, Cd, Hg, O, P, S, Se, Te, H, etc.). The Cu content in the copper foil may be 99.9% by mass or more, or 99.96% by mass or more. The copper foil may be a rolled copper foil. Examples of the oxygen-free copper include an alloy No. C1020 specified in JIS H 3100.

The oxygen content in the copper foil can be determined as follows.

A sample of the copper foil is washed with nitric acid (1+1) for 10 seconds to remove an oxide film on the surface of the sample. The sample is repeatedly washed until the mass of the sample decreases by at least 10%. Next, the sample is washed with distilled water, an alcohol, and acetone in this order. Then, the sample is dried with warm air and immediately subjected to analysis using an inert gas fusion-infrared absorption method to determine the oxygen content in the sample. An oxygen-nitrogen simultaneous analyzer (TC-336 manufactured by LECO Corporation) can be used as the analyzer.

### (Core Member)

When the battery is charged and discharged, a considerably large pressure is repeatedly applied to the core member inserted into the hollow part of the electrode group. Therefore, the core member needs to be made of a material that has sufficiently high mechanical strength and durability. The material of the core member may be a metal material. In particular, it is desirable that the core member is made of stainless steel or nickel plated carbon steel from the standpoint of the strength and durability. Alternatively, the core member may be made of a resin material such as a polyester resin (e.g., polyethylene terephthalate, polyethylene naphthalate, polybutylene terephthalate), an olefin resin (e.g., polyethylene, polypropylene), a polyphenylene sulfide resin, an acrylic resin (e.g., polymethyl methacrylate), a polycarbonate resin, a polyether ether ketone resin, a polyether sulfone resin, a polyamide resin (e.g., aramid resin), or a polyimide resin. A resin material may be used alone, or two or more resin materials may be used in combination as the material of the core member. In particular, it is desirable that the core member is made of polypropylene, polyethylene, or polyethylene terephthalate from the standpoint of resistance to the electrolyte solution, for example.

The shape of the core member can be selected according to the shape of the hollow part of the electrode group. The core member may have a round columnar shape, and preferably has a cylindrical shape. A cylindrical core member can expand and contract appropriately and function like a spring. Also, the non-aqueous electrolyte can be stored in a hollow part of the cylindrical core member, and therefore, the ability of the electrode group to retain the non-aqueous electrolyte can be improved. The thickness of the material of the core member in a radial direction may be 0.1 mm or more and 2 mm or less, for example.

An outer diameter D1 of the core member may be set such that the core member comes into contact with the inner circumferential surface of the electrode group when the battery is initially discharged (e.g., when the battery is discharged for the first time after the battery is purchased or when the battery is discharged after being subjected to a few charge-discharge cycles after the production), for example. In this case, an appropriate pressure is constantly applied from the core member to the electrode group from the inner circumferential surface side from when the battery is charged to when the battery is discharged, and accordingly, deformation of the electrodes is suppressed.

From the standpoint of improving the cycle characteristics, it is preferable that the outer diameter D 1 of the core member and an outer diameter D2 of the electrode group when the battery is discharged satisfy a relationship: D1/D2≤1/4. When D1/D2 is 1/4 or less, it is possible to make a portion that does not contribute to charge-discharge reactions small. Moreover, in this case, the pressure applied from the core member toward the inner circumferential surface of the electrode group and a pressure applied from the battery can toward the outer circumferential surface of the electrode group are likely to be appropriate, and the ability to retain the non-aqueous electrolyte inside the electrode group is likely to be secured during charging and discharging.

An inner diameter of the battery can may be set such that the outer circumferential surface of the electrode group and the inner circumferential surface of the battery can come into contact with each other when the battery is initially discharged (e.g., when the battery is discharged for the first time after the battery is purchased or when the battery is discharged after being subjected to a few charge-discharge cycles after the production). In this case, an appropriate pressure is constantly applied from the battery can to the electrode group from the outer circumferential surface side from when the battery is charged to when the battery is discharged, and accordingly, deformation of the electrodes is suppressed. In this case, the outer diameter D2 of the electrode group is substantially the same as the inner diameter of the battery can.

### (Separator)

A porous substrate that has ion permeability and electrically insulating properties is used as the separator. The separator may be constituted by a substrate or include a plurality of substrates. It is sufficient that each substrate has a sheet shape. The separator may be a stack of a plurality of sheet-shaped substrates or a stack of a substrate and protrusions (spacer). A space may be formed between an electrode and the substrate by the protrusions (spacer). Lithium metal deposited during charging may be stored in the space. The protrusions may be formed along a plurality of lines extending in a longitudinal direction of the separator, may be formed in a honeycomb pattern, or may be distributed like dots, for example.

Examples of the substrate include a microporous film, a woven fabric, a nonwoven fabric, and a heat-resistant layer. The microporous film is made of a resin material such as an olefin resin, a polyamide resin, a polyimide resin, a polyester resin, or a cellulose resin. Examples of the olefin resin include polyethylene, polypropylene, and an ethylene-propylene copolymer. Examples of the polyester resin include polyethylene terephthalate. Examples of a fiber material of the nonwoven fabric include glass fiber, an olefin resin, a polyamide resin, a polyimide resin, a polyester resin, and a cellulose resin. The heat-resistant layer is a layer made of a mixture of an inorganic material (e.g., an aluminum oxide or an aluminum hydroxide) and a resin material, for example.

The thickness of the separator is not particularly limited, and is 10 µm or more and 80 µm or less, for example, and may be 20 µm or more and 70 µm or less. When the separator is a stack of a plurality of substrates, the thickness of the separator is a total thickness of the stack.

The separator may include at least one substrate selected from the group consisting of a microporous sheet (sheet-shaped microporous film) and a nonwoven sheet. Alternatively, the separator may include a microporous sheet and a heat-resistant layer provided on at least one surface of the microporous sheet. The heat-resistant layer may be disposed between the microporous sheet and at least one of the positive electrode and the negative electrode in the electrode group. The heat-resistant layer may be provided so as to cover the entire area of the at least one surface of the microporous sheet or may be provided along lines on the at least one surface of the microporous sheet. A space may be provided between the microporous sheet and at least one of the positive electrode and the negative electrode by the heat-resistant layer provided along lines.

The heat-resistant layer contains inorganic particles and a resin material supporting the inorganic particles, for example. Examples of the resin material include a fluorine-containing resin such as polyvinylidene fluoride (PVdF) and polytetrafluoroethylene, fluorine-containing rubber such as a vinylidene fluoride-tetrafluoroethylene copolymer, and an aramid resin. Examples of the inorganic particles include particles of a metal oxide having insulating properties. Examples of the metal oxide include aluminum oxide (alumina, boehmite, or gibbsite), magnesium oxide, titanium oxide (titania), zirconium oxide, silicon oxide (silica), magnesium hydroxide, and aluminum hydroxide.

The average particle diameter of the inorganic particles is not particularly limited, but is preferably 10 µm or less, for example, and more preferably 0.1 µm or more and 2.0 µm or less. The particle diameter of an inorganic particle is determined by capturing an image of a cross section of the separator with use of an electron microscope, identifying the particle by performing image processing such as binarization, and calculating the diameter of an equivalent circle that has the same area as the particle. The average particle diameter is obtained by determining particle diameters of 100 or more particles and calculating the average of the particle diameters, for example.

The heat-resistant layer may be formed by applying a treatment liquid containing the resin material and the inorganic particles to a surface of the sheet-shaped substrate, the positive electrode, or the negative electrode, and drying the applied liquid, for example. For example, N-methyl-2-pyrrolidone (NMP) is used as a solvent or a dispersion medium of the treatment liquid. The content of inorganic particles in the heat-resistant layer (treatment liquid) is 70 parts by mass or more and 100 parts by mass or less per 100 parts by mass of the resin material, for example. In this case, the strength and heat resistance of the heat-resistant layer are likely to be secured.

The separator may include a substrate and protrusions (spacer). In this case, the spacer is disposed between the substrate and at least one of the positive electrode and the negative electrode. Accordingly, a space is formed between the substrate and at least one of the positive electrode and the negative electrode. The formed space absorbs an increase in the volume due to deposition of lithium metal on the negative electrode, and mitigates stress generated in the negative electrode. Also, the non-aqueous electrolyte is stored in the space, and accordingly, dry-up is suppressed and the non-uniformity of a reaction occurring in the electrode group is suppressed. The protrusions may contain a resin material, or contain a resin material and inorganic particles, for example. The examples of the resin material and the inorganic particles listed above for the heat-resistant layer may also be used as the resin material and the inorganic particles contained in the protrusions.

It is sufficient that the space is present at least in a discharged state. The discharged state referred to here is a state after a large amount of lithium metal has dissolved from the negative electrode, such as a state where the SOC is 0.1×C or less, for example. However, the space need not be completely filled with lithium metal in a charged state, and may be present in the fully-charged state, for example.

The spacer is disposed on at least one selected from the group consisting of a surface of the positive electrode, a surface of the negative electrode, and a surface of the substrate. It is preferable that the spacer is disposed on a surface of the positive electrode or the positive-electrode-side surface of the substrate. In this case, a surface pressure is likely to be applied from the substrate to the negative electrode, dendritic deposition of lithium metal is suppressed, and this is advantageous in increasing the capacity retention rate in charge-discharge cycles.

The height of the spacer may be designed as appropriate according to the thickness of the substrate and a distance between electrode plates. When the separator includes the spacer, the negative electrode includes a first region that faces the spacer and a second region that does not face the spacer. The space between electrode plates is formed in the second region. The percentage of the area of the first region to the total area of the first region and the second region is not particularly limited, and may be 5% or more and 30% or less, or 5% or more and 20% or less, for example, in view of a balance between the cycle characteristics and an internal resistance.

The following further describes an embodiment of a battery according to the present disclosure with reference to the drawings. In the drawings, the shape and features of each component do not necessarily reflect actual dimensions, and are not necessarily shown in the same scale. The same components shown in the drawings are denoted by the same reference signs.

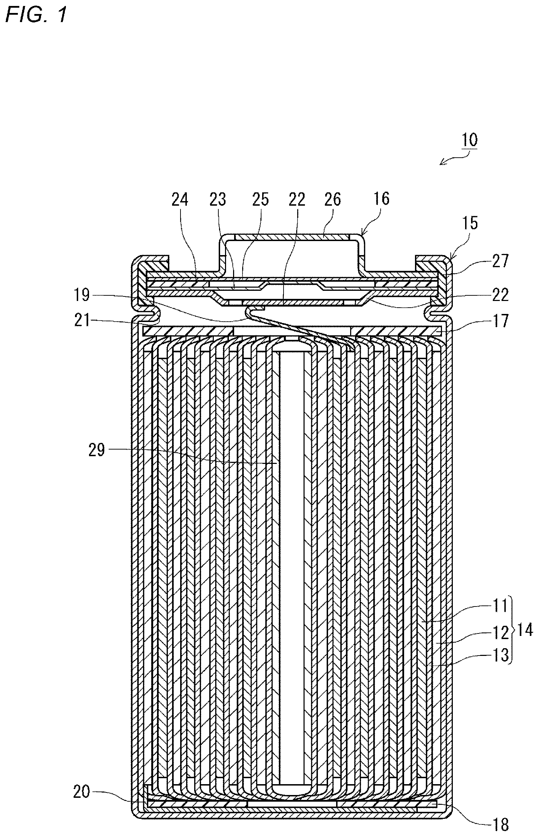

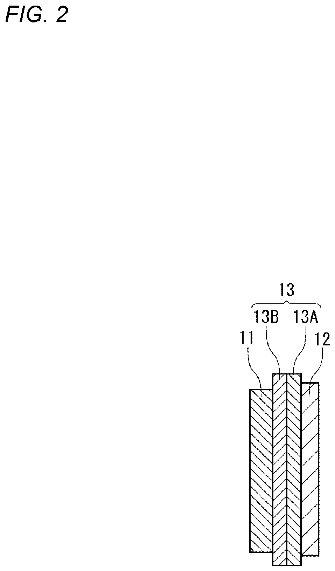

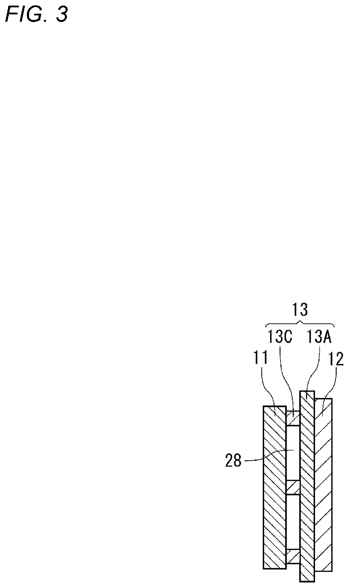

FIG. 1 is a schematic longitudinal cross-sectional view of a lithium secondary battery according to an embodiment of the present disclosure taken along a plane parallel to a winding axis. FIG. 2 is a schematic diagram showing an example of a configuration of an electrode group. FIG. 3 is a schematic diagram showing another example of the configuration of the electrode group.

A battery 10 includes a cylindrical battery case, a wound electrode group 14 housed in the battery case, and a non-aqueous electrolyte (not shown). The battery case includes a cylindrical battery can 15 having a bottom and a sealing body 16 that seals an opening of the battery can 15. The battery can 15 includes an annular step portion 21 formed by partially pressing the sidewall of the battery can from the outside in the vicinity of the opening. The sealing body 16 is supported on the opening-side surface of the step portion 21. A gasket 27 is placed between the battery can 15 and the sealing body 16 to secure the hermeticity of the battery can. Inside the battery can 15, electrically insulating plates 17 and 18 are placed respectively at two ends of the electrode group 14 in the winding axis direction.

The sealing body 16 includes a filter 22, a lower valve body 23, an electrically insulating member 24, an upper valve body 25, and a cap 26. The cap 26 is disposed outside the battery can 15, and the filter 22 is disposed inside the battery can 15. Center portions of the lower valve body 23 and the upper valve body 25 are connected to each other, and the insulating member 24 is disposed between peripheral portions of the lower valve body 23 and the upper valve body 25. Peripheral portions of the filter 22 and the lower valve body 23 are connected to each other. Peripheral portions of the upper valve body 25 and the cap 26 are connected to each other. The lower valve body 23 is provided with an air vent hole. When the internal pressure of the battery can rises due to abnormal heat generation or other events, the upper valve body 25 bulges toward the cap 26 away from the lower valve body 23. Consequently, electrical connection between the lower valve body 23 and the upper valve body 25 is cut off. When the internal pressure further rises, the upper valve body 25 ruptures to let gas escape through an opening provided in the cap 26.

The electrode group 14 includes a positive electrode 11, a negative electrode (negative electrode current collector) 12, and a separator 13. The positive electrode 11, the negative electrode 12, and the separator 13 disposed therebetween all have elongated sheet shapes (or band-like shapes) and are wound together such that the width direction of each of them is parallel to the winding axis. A core member 29 is disposed in a hollow part of the electrode group 14. Although the illustrated core member 29 has a cylindrical shape, the shape of the core member 29 is not limited to this shape, and may also be a round columnar shape, for example.

The positive electrode 11 includes a positive electrode current collector and a positive electrode mixture layer. The positive electrode 11 is electrically connected, via a positive electrode lead 19, to the cap 26 that serves as a positive electrode terminal. One end of the positive electrode lead 19 is connected to a position near the center of the positive electrode 11 in the longitudinal direction, for example. The other end of the positive electrode lead 19 led out from the positive electrode 11 is passed through a through hole provided in the insulating plate 17 and welded to an inner surface of the filter 22.

The negative electrode 12 is electrically connected, via a negative electrode lead 20, to the battery can 15 that serves as a negative electrode terminal. One end of the negative electrode lead 20 is connected to an end portion of the negative electrode 12 in the longitudinal direction, for example, and the other end of the negative electrode lead 20 is welded to an inner bottom surface of the battery can 15.

In the electrode group 14 shown in FIG. 2, the separator 13 disposed between the positive electrode 11 and the negative electrode 12 is constituted by a sheet-shaped first substrate 13A and a sheet-shaped second substrate 13B. Materials of the first substrate and the second substrate may be the same as each other or different from each other. Thicknesses of the first substrate and the second substrate may be the same as each other or different from each other. When the substrates are microporous sheets, the microporous sheets melt and pores are closed when the temperature of the battery rises due to a short circuit or the like, and thus a current can be shut off. When the substrates are nonwoven sheets, voids (pores) in the substrates can be made relatively large.

Alternatively, the separator 13 included in the electrode group 14 may be constituted by the sheet-shaped first substrate 13A and line-shaped protrusions 13C as shown in FIG. 3. In this case, the first substrate 13Amay be a microporous sheet, and the protrusions 13C may be a heat-resistant layer. The protrusions 13C serve as a spacer, and a space 28 is formed between the positive electrode 11 and the negative electrode 12 by the protrusions 13C.

The protrusions 13C have a rectangular cross-sectional shape, but the cross-sectional shape of the protrusions 13C is not limited to this shape, and may also be a trapezoidal shape, for example. The protrusions 13C are provided between the positive electrode 11 and the first substrate 13A, but may also be provided between the negative electrode 12 and the first substrate 13A.

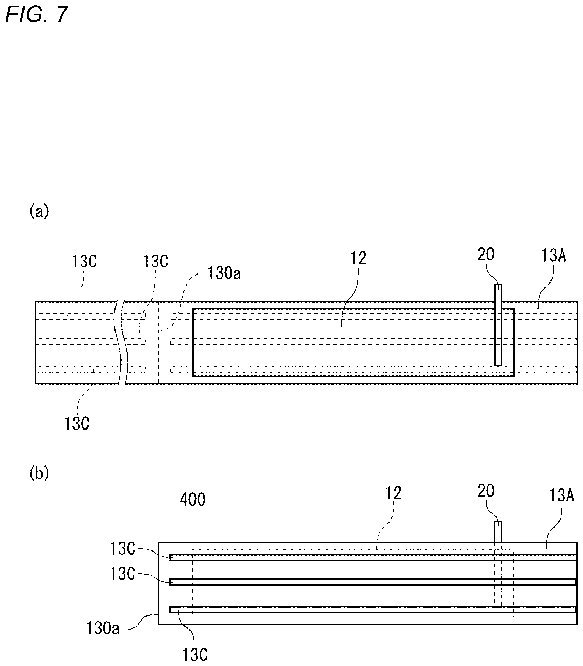

As shown in FIG. 7, when the first substrate 13A including the line-shaped protrusions 13C is viewed in a normal direction with respect to a main surface of the first substrate 13 A before the electrode group is formed, the plurality of protrusions 13C are provided at equal intervals in the width direction of the first substrate 13A. Also, the plurality of protrusions 13C extend in parallel to the length direction of the first substrate 13A.

In the present embodiment, three line-shaped protrusions 13C are provided in parallel to each other along the length direction of the first substrate 13A, but the number of line-shaped protrusions is not limited to this example. Also, the arrangement of the line-shaped protrusions is not limited to this example. When the first substrate including protrusions is viewed in the normal direction with respect to a main surface of the first substrate before the electrode group is formed, the protrusions may be provided so as to extend along straight lines or curved lines. Alternatively, the protrusions may be formed in a honeycomb pattern, or may be distributed like dots, for example.

The space 28 is formed between the positive electrode 11 and the negative electrode 12 by the separator 13 including the protrusions 13C. In the discharged state, lithium metal is not deposited on the surface of the negative electrode current collector, and the space 28 is secured. On the other hand, in the charged state, lithium metal is deposited on the surface of the negative electrode current collector, and the deposited lithium metal is stored in the space 28 with a pressing force applied from the first substrate 13Ato the lithium metal. In this example, the negative electrode 12 includes the negative electrode current collector in the discharged state, and includes the negative electrode current collector and lithium metal deposited on the surface of the negative electrode current collector in the charged state. However, this configuration is merely an example, and the negative electrode 12 may include not only the negative electrode current collector but also lithium metal on the surface of the negative electrode current collector in the discharged state as well.

Since the lithium metal is stored in the space 28 between the positive electrode 11 and the separator 13, apparent changes in the volume of the electrode group associated with the deposition of lithium metal during charge-discharge cycles are reduced. Accordingly, stress applied to the negative electrode current collector is also suppressed. Moreover, since a pressure is applied from the first substrate 13A to lithium metal stored between the negative electrode 12 and the first substrate 13A, the lithium metal is deposited in a controlled manner and is unlikely to be isolated, and a reduction in a charge-discharge efficiency can be suppressed.

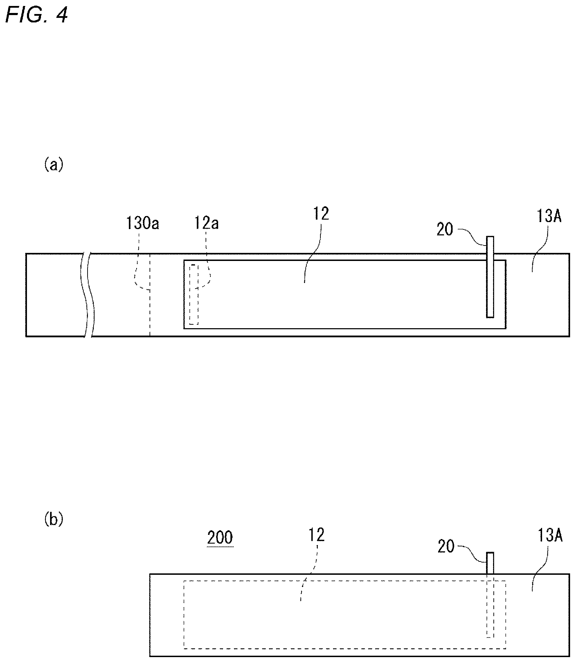

The following describes an example of a method for manufacturing an electrode group including a core member, which has the configuration shown in FIG. 2 and includes the separator 13 constituted by the first substrate 13A and the second substrate 13B with reference to FIGS. 4 to 6.

The band-shaped first substrate 13A is folded in half along the width direction in a center portion in the longitudinal direction to make a fold 130a. The negative electrode 12 provided with the negative electrode lead 19 is prepared and is placed at a predetermined position on the first substrate 13A (FIG. 4(a)). At this time, an end portion (a portion that does not face the positive electrode) of the negative electrode 12 is fixed to the first substrate 13A with a double-sided tape 12a or the like, for example. The first substrate 13A is folded in half to obtain a negative electrode composite body 200 in which the first substrate 13A is disposed on both surfaces of the negative electrode 12 (FIG. 4(b)).

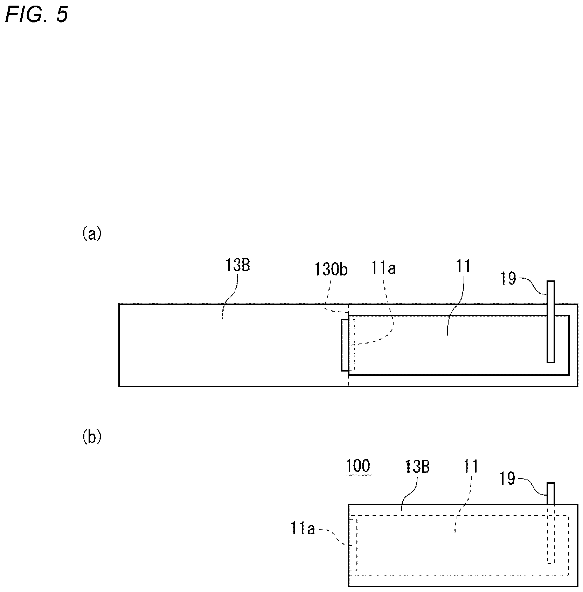

The band-shaped second substrate 13B is folded in half along the width direction in a center portion in the longitudinal direction to make a fold 130b. The positive electrode 13 provided with the positive electrode lead 20 is prepared and the positive electrode 11 is placed at a predetermined position on the second substrate 13B (FIG. 5(a)). The second substrate 13B is folded in half to obtain a positive electrode composite body 100 in which the second substrate 13B is disposed on both surfaces of the positive electrode 11 (FIG. 5(b)). At this time, a double-sided tape 11a is attached along the fold 130b in the second substrate 130b, and an end portion of the positive electrode 11 is fixed to the second substrate 13B with the double-sided tape 11a, for example.

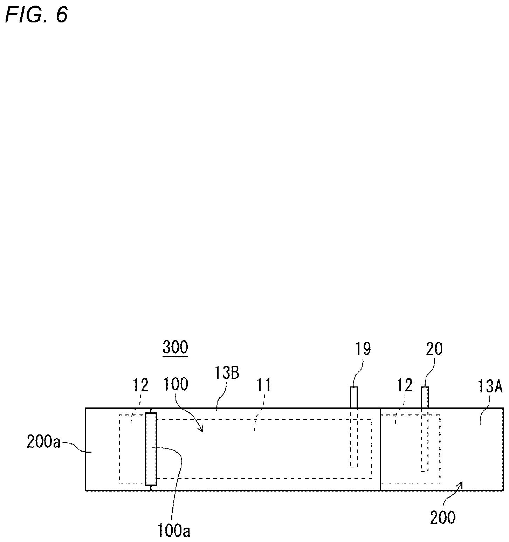

The positive electrode composite body 100 is placed at a predetermined position on the negative electrode composite body 200, and an end portion of the positive electrode composite body 100 is fixed with a tape 100a or the like to obtain a positive and negative electrode stack 300 (FIG. 6). The core member is placed in an end portion 200a (on a surface opposite to the positive electrode composite body 100) of the positive and negative electrode stack 300 (negative electrode composite body 200) in the length direction and is fixed with a tape or the like, and then the positive and negative electrode composite body 300 is wound around the core member such that the negative electrode composite body 200 is located on the inner side (the positive electrode composite body 100 is located on the outer side).

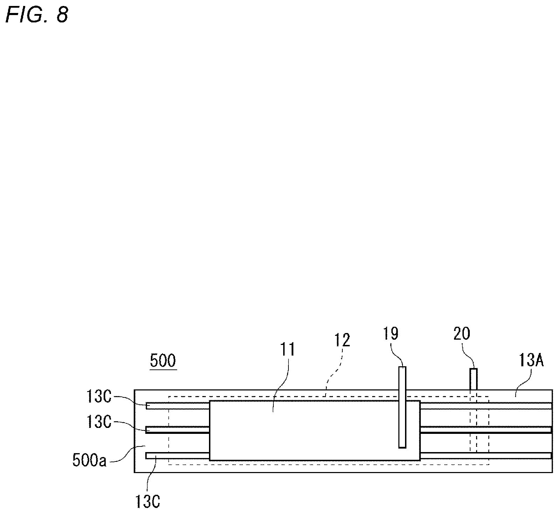

The following describes an example of a method for manufacturing an electrode group including a core member, which has the configuration shown in FIG. 3 and includes the separator 13 constituted by the first substrate 13A and the line-shaped protrusions 13C with reference to FIGS. 7 and 8.

The protrusions 13C are provided on one surface of the first substrate 13A (FIG. 7(a)). At this time, the protrusions 13C are not provided in a portion in which a fold 130a, which will be described later, will be made (a portion to which the core member will be attached). The first substrate 13A is folded in half to make the fold 130a. The negative electrode 12 is placed at a predetermined position on another surface of the first substrate 13A (FIG. 7(a)). The first substrate 13A is folded in half to obtain a negative electrode composite body 400 in which the first substrate 13Aincluding the protrusions 13C is disposed on both surfaces of the negative electrode 12 (FIG. 4(b)).

The positive electrode 11 is placed at a predetermined position on the negative electrode composite body 400 and is fixed with an adhesive tape or the like to obtain a positive and negative electrode stack 500 (FIG. 8). The core member is placed in an end portion 500a (on a surface opposite to the positive electrode 11) of the positive and negative electrode stack 500 (negative electrode composite body 400) in the length direction and is fixed with a tape or the like, and then the positive and negative electrode stack 500 is wound around the core member such that the negative electrode composite body 400 is located on the inner side (the positive electrode 11 is located on the outer side).

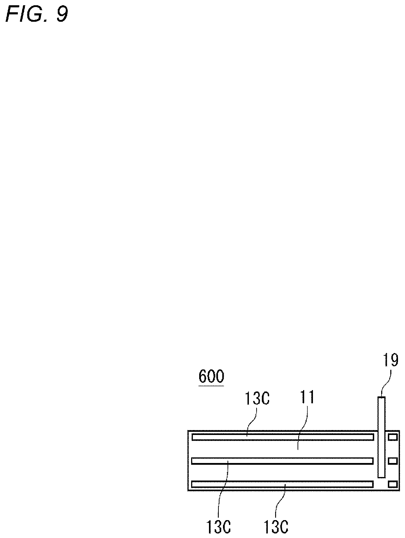

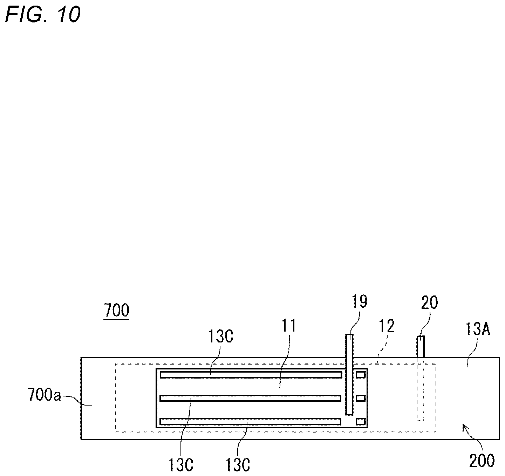

The following describes another example of the method for manufacturing an electrode group including a core member, which has the configuration shown in FIG. 3 and includes the separator 13 constituted by the first substrate 13A and the line-shaped protrusions 13C with reference to FIGS. 9 and 10.

The protrusions 13C are provided on both surfaces of the positive electrode 11 to obtain a positive electrode composite body 600 (FIG. 9). At this time, the protrusions 13C are not provided in a portion to which the positive electrode lead 19 is attached. The negative electrode composite body 200 shown in FIG. 4(b) is prepared, and the positive electrode composite body 600 is placed at a predetermined position on the negative electrode composite body 200 and is fixed with a tape or the like to obtain a positive and negative electrode stack 700 (FIG. 10). The core member is placed in an end portion 700a (on a surface opposite to the positive electrode composite body 600) of the positive and negative electrode stack 700 (negative electrode composite body 200) in the length direction and is fixed with a tape or the like, and then the positive and negative electrode composite body 700 is wound around the core member such that the negative electrode composite body 200 is located on the inner side (the positive electrode composite body 600 is located on the outer side).

Although the lithium secondary battery including the wound electrode group has a cylindrical shape in the illustrated example, the shape and the like of the lithium secondary battery are not limited to those in this example, and the lithium secondary battery may have a rectangular shape or a shape appropriately selected from various shapes in accordance with the application or the like. Also, known configurations other than those described above can be applied without particular limitation.

The following specifically describes the negative electrode, the positive electrode, and the non-aqueous electrolyte of the lithium secondary battery.

### (Negative Electrode)

The negative electrode includes the negative electrode current collector. In the lithium secondary battery, lithium metal is deposited on the surface of the negative electrode when the battery is charged. More specifically, lithium ions contained in the non-aqueous electrolyte receive electrons on the negative electrode during charging and become lithium metal, which is deposited on the surface of the negative electrode. The lithium metal deposited on the surface of the negative electrode dissolves as lithium ions in the non-aqueous electrolyte during discharging. Note that the lithium ions contained in the non-aqueous electrolyte may either be derived from a lithium salt added to the non-aqueous electrolyte or supplied from a positive electrode active material during charging, or both.

The negative electrode may also include the negative electrode current collector and sheet-shaped lithium metal or a lithium alloy, which is in intimate contact with a surface of the negative electrode current collector. That is to say, a base layer (layer made of lithium metal or a lithium alloy (hereinafter also referred to as a "lithium base layer")) containing lithium metal may also be provided on the negative electrode current collector in advance. The lithium alloy may contain elements such as aluminum, magnesium, indium, zinc, copper, and silver in addition to lithium. It is possible to suppress dendritic deposition of lithium metal more effectively by providing the lithium metal base layer and causing lithium metal to be deposited on the lithium metal base layer during charging. The thickness of the lithium metal base layer is not particularly limited, and may be 5 µm to 25 µm, for example.

The negative electrode may also include a lithium ion absorbing layer (layer that realizes a capacity through absorption and release of lithium ions by a negative electrode active material (e.g., graphite)) supported on the negative electrode current collector. In this case, the open circuit potential of the negative electrode in the fully-charged state may be 70 mV or less with respect to lithium metal (lithium dissolution/deposition potential). When the open circuit potential of the negative electrode in the fully-charged state is 70 mV or less with respect to lithium metal, lithium metal is present on a surface of the lithium ion absorbing layer in the fully-charged state. That is to say, the negative electrode realizes a capacity through deposition and dissolution of lithium metal.

The lithium ion absorbing layer is a layer formed of a negative electrode mixture containing the negative electrode active material. The negative electrode mixture may contain a binder, a thickener, an electrically conductive agent, etc., in addition to the negative electrode active material.

Examples of the negative electrode active material include a carbonaceous material, a Si-containing material, and a Sn-containing material. The negative electrode may contain one negative electrode active material or two or more negative electrode active materials in combination. Examples of the carbonaceous material include graphite, easily-graphitizable carbon (soft carbon), and hardly-graphitizable carbon (hard carbon).

Examples of the electrically conductive material include a carbon material. Examples of the carbon material include carbon black, acetylene black, Ketjen Black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene and polyvinylidene fluoride.

### (positive Electrode)

The positive electrode includes a positive electrode current collector and a positive electrode mixture layer supported by the positive electrode current collector, for example. The positive electrode mixture layer contains a positive electrode active material, an electrically conductive material, and a binder, for example. The positive electrode mixture layer may be formed on one surface or both surfaces of the positive electrode current collector. The positive electrode is obtained by applying a positive electrode mixture slurry containing the positive electrode active material, the electrically conductive material, and the binder to both surfaces of the positive electrode current collector, drying the applied films, and then rolling the dry applied films, for example. Known materials may be used as the positive electrode active material, the binder, the electrically conductive material, and the like.

The positive electrode active material absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred in terms of its low production cost and high average discharge voltage.

The lithium-containing transition metal oxide is a composite oxide containing lithium and a metal Me other than lithium, and the metal Me includes at least a transition metal. Among lithium-containing transition metal oxides, a composite oxide that has a crystal structure like that of rock-salt (layered rock-salt) having a layered structure is preferred in view of achieving a high capacity.

The metal Me may include Sc, Ti, V, Cr, Mn, Fe, Co, Ni, Cu, Y, Zr, W, etc., as a transition metal element. The lithium-containing transition metal oxide may contain one transition metal element or two or more transition metal elements. It is desirable that the metal Me includes at least one selected from the group consisting of Co, Ni, and Mn as the transition metal element, and it is desirable that the metal Me includes at least Ni as the transition metal element.

The lithium-containing transition metal oxide may contain one or more typical elements as necessary. Examples of the typical elements include Mg, Al, Ca, Zn, Ga, Ge, Sn, Sb, Pb, and Bi. The typical element may be Al, for example. That is to say, the metal Me may include Al as an optional component.

The lithium-containing transition metal oxide is represented by a general formula (1): LiₐNi_{b}M_{1-b}O₂, for example. In the general formula (1), a and b satisfy 0.9≤a≤12 and 0.65≤b≤1, and M is at least one element selected from the group consisting of Co, Mn, Al, Ti, Fe, Nb, B, Mg, Ca, Sr, Zr, and W.

A molar ratio: mLi/mMe of a total amount mLi of Li contained in the positive electrode and the negative electrode to an amount mMe of the metal Me contained in the lithium-containing transition metal oxide is 1.2 or less, for example, and may be 1.1 or less.

Examples of the material of the positive electrode current collector include a metal material containing Al, Ti, Fe, etc., for example. The metal material may be Al, an Al alloy, Ti, a Ti alloy, or a Fe alloy (e.g., stainless steel (SUS)).

The thickness of the positive electrode current collector is not particularly limited, and is 5 µm or more and 300 µm or less, for example.

### (Non-Aqueous Electrolyte)

The non-aqueous electrolyte having lithium ion conductivity contains a non-aqueous solvent, and lithium ions and anions dissolved in the non-aqueous solvent, for example. The non-aqueous electrolyte may be a liquid or a gel. A liquid non-aqueous electrolyte is prepared by dissolving a lithium salt in a non-aqueous solvent. When the lithium salt dissolves in the non-aqueous solvent, lithium ions and anions are produced.

The lithium salt or anions may be any known lithium salt or anions that are used for non-aqueous electrolytes of lithium secondary batteries. Specific examples thereof include BF₄⁻, ClO₄⁻, PF₆⁻, CF₃SO₃⁻, CF₃CO₂⁻, imide anions, and oxalate complex anions. Examples of the imide anions include N(SO₂CF₃)₂⁻ and N(CₘF₂ₘ₊₁SO₂)ₓ(CₙF₂ₙ₊₁SO₂)_{y}⁻ (m and n are independently 0 or an integer of 1 or more, x and y are independently 0, 1, or 2, and satisfy x+y=2). The oxalate complex anions may contain boron and/or phosphorus. The non-aqueous electrolyte may contain one of these anions, or two or more of them.

From the standpoint of suppressing dendritic deposition of lithium metal, the non-aqueous electrolyte preferably contains at least oxalate complex anions, in particular, oxalate complex anions containing fluorine. The oxalate complex anions containing fluorine interact with lithium to make lithium metal more likely to be deposited uniformly in a fine particulate state. Therefore, localized deposition of lithium metal is likely to be suppressed. The oxalate complex anions containing fluorine may be used in combination with other anions. The other anions may be PF₆⁻ and/or imide anions. Examples of the oxalate complex anions include bis(oxalato)borate anions, difluoro(oxalato)borate anions (BF₂(C₂O₄)⁻), PF₄(C₂O₄)⁻, and PF₂(C₂O₄)₂⁻, and it is desirable to use at least difluoro(oxalato)borate anions.

Examples of the non-aqueous solvent include an ester, an ether, a nitrile, an amide, and halogen substituted derivatives of these. The non-aqueous electrolyte may include one of these non-aqueous solvents, or two or more of them. Examples of the halogen substituted derivatives include fluorides.

Examples of the ester include carbonic esters and carboxylic acid esters. Examples of cyclic carbonic esters include ethylene carbonate, propylene carbonate, and fluoroethylene carbonate (FEC). Examples of chain carbonic esters include dimethyl carbonate (DMC), ethyl methyl carbonate (EMC), and diethyl carbonate. Examples of cyclic carboxylic acid esters include γ-butyrolactone and γ-valerolactone. Examples of chain carboxylic acid esters include ethyl acetate, methyl propionate, and methyl fluoropropionate.

Examples of the ether include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the non-aqueous electrolyte is 0.5 mol/L or more and 3.5 mol/L or less, for example. The anion concentration in the non-aqueous electrolyte may be set to 0.5 mol/L or more and 3.5 mol/L or less. The oxalate complex anion concentration in the non-aqueous electrolyte may be set to 0.05 mol/L or more and 1 mol/L or less.

### [Examples]

The following describes the lithium secondary battery according to the present disclosure in more detail based on Examples and Comparative Examples. However, the present disclosure is not limited to the following Examples.

### <<Examples 1, 2, and 4 to 10, and Comparative Examples 2 and 3»

### (Preparation of negative electrode)

Aband-shaped negative electrode current collector (thickness: 10 µm) was prepared. A lithium metal foil (thickness: 30 µm) was pressure-bonded to each surface of the negative electrode current collector in a dry atmosphere in which the dew point was -30°C or lower to provide a lithium metal layer (base layer) on each surface of the negative electrode current collector. Thus, a negative electrode 12 was obtained. A negative electrode lead 20 made of Ni was attached to a predetermined position on the negative electrode 12. Note that the lithium metal layer had a thickness of 55 µm when the battery was charged and a thickness of 30 µm when the battery was discharged. That is to say, the thickness X of lithium metal deposited on the negative electrode when the battery was charged was 25 µm.

An austenitic stainless steel foil, an oxygen-free copper foil, or an electrodeposited copper foil was used as the negative electrode current collector. A foil made of SUS316L or SUS304 was used as the austenitic stainless steel foil. A foil made of an alloy No. C1020 specified in JIS H 3100 was used as the oxygen-free copper foil.

### (Preparation of first substrate)

The band-shaped first substrate 13A shown in FIG. 4(a) was prepared. A sheet-shaped microporous polyethylene film was used as the first substrate 13A. The first substrate 13A had a thickness Y1 shown in Table 1.

### (Production of negative electrode composite body)

The negative electrode 12 was placed at a predetermined position on the first substrate 13A (FIG. 4(a)). At this time, an end portion (a portion that did not face the positive electrode) of the negative electrode 12 was fixed to the first substrate 13A with a double-sided tape 12a. Next, the first substrate 13A was folded in half along the fold 130a to obtain a negative electrode composite body 200 in which the first substrate 13A was disposed on both surfaces of the negative electrode 12 (FIG. 4(b)).

### (Production of positive electrode)

2.5 parts by mass of acetylene black and 2.5 parts by mass of polyvinylidene fluoride were added to 95 parts by mass of a positive electrode active material, and an appropriate amount of N-methyl-2-pyrrolidone was further added to the mixture and the mixture was stirred to prepare a positive electrode mixture slurry. A lithium-containing transition metal oxide containing Li, Ni, Co, and Al (a molar ratio of Li to the total amount of Ni, Co, and Al was 1.0) and having a rock salt-type layered structure was used as the positive electrode active material.

The positive electrode mixture slurry was applied to both surfaces of a band-shaped Al foil (positive electrode current collector) and dried, and the applied films were rolled to obtain a stack including a positive electrode mixture layer formed on each surface of the positive electrode current collector. The stack was cut to a predetermined electrode size to obtain a band-shaped positive electrode 11. A positive electrode lead 19 made of Al was attached to a predetermined position on the positive electrode 11. A filling amount of the positive electrode mixture layer (the positive electrode active material) was adjusted as appropriate such that the thickness X of lithium metal deposited on the negative electrode current collector during charging was 25 µm.

### (Preparation of second substrate)

The band-shaped second substrate 13B shown in FIG. 5(a) was prepared. A sheet-shaped microporous polyethylene film or a sheet-shaped nonwoven fabric made of polyester was used as the second substrate 13B. The second substrate 13B had a thickness Y2 shown in Table 1.

### (Production of positive electrode composite body)

The positive electrode 11 was placed at a predetermined position on the second substrate 13B (FIG. 5(a)). At this time, an end portion of the positive electrode 11 was fixed to the second substrate 13B with a double-sided tape 11a. Next, the second substrate 13B was folded in half along the fold 130b to obtain a positive electrode composite body 100 in which the second substrate 13B was disposed on both surfaces of the positive electrode 11 (FIG. 5(b)).

### (Preparation of core member)

A core member made of SUS304 or polypropylene (PP) was prepared. The core member had a round columnar shape or a cylindrical shape. The core member had an outer diameter D1 of 1.8 mm or 3 mm.

When the battery was initially discharged, an outer circumferential surface of an electrode group came into contact with an inner circumferential surface of a battery can, and an outer diameter D2 of the electrode group was equivalent to an inner diameter (9 mm) of the battery can. A ratio: D1/D2 of the outer diameter D1 of the core member to the outer diameter D2 of the electrode group when the battery was discharged was 1/3 or 1/5.

### (Production of electrode group including core member)

The positive electrode composite body 100 was placed at a predetermined position on the negative electrode composite body 200, and an end portion of the positive electrode composite body 100 was fixed with a tape 100a to obtain a positive and negative electrode stack 300 as shown in FIG. 6.

The core member 29 was placed on an end portion 200a (a surface opposite to the positive electrode composite body 100) of the positive and negative electrode stack 300 (negative electrode composite body 200) and fixed with a tape or the like. The positive and negative electrode stack 300 was wound around the core member 29 such that the negative electrode composite body 200 was located on the inner side (the positive electrode composite body 100 was located on the outer side). Thus, an electrode group 14 including the core member 29 was obtained. The electrode group 14 included a separator 13 constituted by the first substrate 13A and the second substrate 13B. The positive electrode lead 19 and the negative electrode lead 20 were exposed from an edge surface of the columnar wound electrode group.

### (Preparation of non-aqueous electrolyte)

LiPF₆ and LiBF₂(C₂O₄) were dissolved in a mixed solvent obtained by mixing 1,2-dimethoxyethane and 1, 1,2,2-tetrafluoroethyl-2,2,2-trifluoroethyl ether to prepare a non-aqueous electrolyte. The LiPF₆ concentration in the non-aqueous electrolyte was 1 mol/L. The LiBF₂(C₂O₄) concentration in the non-aqueous electrolyte was 0.1 mol/L.

### (Assembly of battery)

The electrode group was inserted into a cylindrical battery can having a bottom, the non-aqueous electrolyte was poured into the battery can, and the opening of the battery can was sealed with a sealing body. At this time, the positive electrode lead was connected to the sealing body, and the negative electrode lead was connected to the battery can. A gasket was disposed between the sealing body and the battery can. Thus, a lithium secondary battery was completed. Note that A1, A2, and A4 to A10 in Table 1 are lithium secondary batteries of Examples 1, 2, and 4 to 10, respectively. B2 and B3 in Table 2 are batteries of Comparative Examples 2 and 3.

### «Example 3»

The thickness Y1 of the first substrate was set to 40 µm. The positive electrode was placed at a predetermined position on the negative electrode composite body without the second substrate being used, and thus a positive and negative electrode stack was obtained.

A battery A3 was obtained in the same manner as the battery A2 of Example 2 except that the positive and negative electrode stack described above was used.

### «Example 11»

### (Preparation of spacer ink)

90 parts by mass of inorganic particles, 10 parts by mass of polyvinylidene fluoride (PVdF), which is a resin material, and N-methyl-2-pyrrolidone, which is a dispersion medium, were mixed to prepare a spacer ink. Alumina particles (including alumina particles having an average particle diameter of 1 µm and alumina particles having an average particle diameter of 0.1 µm at a mass ratio of 10/1) were used as the inorganic particles.

### (Production of first substrate including spacer: formation of line-shaped protrusions on first substrate)

The same first substrate as that used in Example 6 was prepared. The spacer ink was applied to a surface (the positive electrode-side surface) of the first substrate with use of a dispenser and dried with hot air to form line-shaped protrusions (spacer). Specifically, as shown in FIG. 7(a), a total of three mutually parallel line-shaped protrusions 13C (width: 1 mm, height: 30 µm) were formed on a surface of the first substrate 13A along the length direction thereof in two end portions and a center portion in the width direction of the first substrate 13A. At this time, the spacer ink was intermittently applied so as not to form the protrusions 13C in a portion in which a fold 130a was to be made (the core member 29 was to be attached).

### (Production of electrode group including core member)

The negative electrode 12 was placed at a predetermined position on the other surface (on which the protrusions 13C were not formed) of the first substrate 13A (FIG. 7(a)). The first substrate 13A was folded in half to dispose the first substrate 13Aincluding the protrusions 13C on both surfaces of the negative electrode 12, and thus a negative electrode composite body 400 was obtained (FIG. 7(b)). The positive electrode 11 was placed at a predetermined position on the negative electrode composite body 400 and fixed with a tape or the like to obtain a positive and negative electrode stack 500 (FIG. 8). The core member 29 was placed on an end portion 500a (on a surface opposite to the positive electrode 11) of the positive and negative electrode stack 500 (negative electrode composite body 400) in the length direction and fixed with a tape or the like. The positive and negative electrode stack 500 was wound around the core member 29 such that the negative electrode composite body 400 was located on the inner side (the positive electrode 11 was located on the outer side). Thus, an electrode group 14 including the core member 29 was obtained. The electrode group 14 included a separator 13 constituted by the first substrate 13A and the line-shaped protrusions 13C.

A battery A11 was obtained in the same manner as the battery A10 of Example 10 except that the electrode group including the core member, which was obtained as described above, was used.

### <<Example 12»

### (Production of positive electrode including spacer: formation of line-shaped protrusions on positive electrode)

The spacer ink described above was applied to both surfaces of the positive electrode with use of a dispenser and dried with hot air to form line-shaped protrusions (spacer). Specifically, as shown in FIG. 9, a total of three mutually parallel line-shaped protrusions 13C (width: 1 mm, height: 30 µm) were formed on both surfaces of the positive electrode 11 along the length direction thereof in two end portions and a center portion in the width direction of the positive electrode 11. At this time, the spacer ink was intermittently applied so as not to form the protrusions 13C in a portion to which the positive electrode lead 19 was attached. Thus, the protrusions 13C were provided on both surfaces of the positive electrode 11 to obtain a positive electrode composite body 600 (FIG. 9).

### (Production of electrode group including core member)

The negative electrode composite body 200 shown in FIG. 4(a) was prepared and the positive electrode composite body 600 was placed at a predetermined position on the negative electrode composite body 200 and fixed with a tape or the like to obtain a positive and negative electrode stack 700 (FIG. 10). The core member 29 was placed on an end portion 700a (on a surface opposite to the positive electrode composite body 600) of the positive and negative electrode stack 700 (negative electrode composite body 200) in the length direction and fixed with a tape or the like. The positive and negative electrode stack 700 was wound around the core member 29 such that the negative electrode composite body 200 was located on the inner side (the positive electrode composite body 600 was located on the outer side). Thus, an electrode group 14 including the core member 29 was obtained. The electrode group 14 included a separator 13 constituted by the first substrate 13A and the line-shaped protrusions 13C.

A battery A12 was obtained in the same manner as the battery A10 of Example 10 except that the electrode group including the core member, which was obtained as described above, was used.

### <<Example 13»

The thickness Y1 of the first substrate was set to 80 µm. The positive electrode was placed at a predetermined position on the negative electrode composite body without the second substrate being used, and thus a positive and negative electrode stack was obtained.

A battery A13 was obtained in the same manner as the battery A2 of Example 2 except that the positive and negative electrode stack described above was used and the outer diameter D1 of the core member was set to 1.8 mm.

### «Comparative Example 1»

An electrodeposited copper foil was used as the negative electrode current collector. An electrode group having a hollow part was obtained by spirally winding the positive and negative electrode stack with use of a winding core and removing the winding core.

A battery B1 was obtained in the same manner as the battery A10 of Example 10 except the above changes.

### «Comparative Example 4»

A foil made of SUS316 was used as the negative electrode current collector. An electrode group having a hollow part was obtained by spirally winding the positive and negative electrode stack with use of a winding core and removing the winding core.

A battery B4 was obtained in the same manner as the battery A10 of Example 10 except the above changes.

### «Comparative Example 5»

The positive electrode was placed at a predetermined position on the negative electrode composite body without the second substrate being used, and thus a positive and negative electrode stack was obtained. An electrode group having a hollow part was obtained by spirally winding the positive and negative electrode stack with use of a winding core and removing the winding core.

A battery B5 was obtained in the same manner as the battery A1 of Example 1 except the above changes.

### [Evaluation]

A charge-discharge cycle test was performed on each of the obtained batteries in an environment at a temperature of 25°C. The batteries were charged and discharged under the following conditions. A pause of 20 minutes was taken between charging and discharging.

### (Charging)

Constant-current charging was performed at 10 mA until the battery voltage reached 4.1 V, and then constant-voltage charging was performed at the voltage of 4.1 V until the current value reached 1 mA.

### (Discharging)

Constant-current discharging was performed at 10 mA until the battery voltage reached 3.0 V

The charging and discharging were repeatedly performed until 100 cycles, and a rate: (C2/C1)×100 of a discharge capacity C2 at the 100th cycle to a discharge capacity C1 at the 1st cycle was determined as a cycle capacity retention rate (%).

Evaluation results are shown in Tables 1 to 2. The cycle capacity retention rates shown in the Tables 1 and 2 are relative values (indexes) when the cycle capacity retention rate of the battery B 1 of Comparative Example 1 is taken to be 100.

**[Table 1]**

| Lithium secondary battery | Negative electrode | | Separator | | | | Inter-electrode distance Y (Y1+Y2) (Nm) | Y/X | Core member | | Outer diameter ratio D1/D2 | Cycle capacity retention rate (index) |
|---|---|---|---|---|---|---|---|---|---|---|---|---|
| | Material of negative electrode current collector | Thickness X of Li deposited during charging (pm) | First substrate (negative electrode side) | | Second substrate (positive electrode side) | | | | Material | Shape | | |
| | | | Type | Thickness Y1 (Nm) | Type | Thickness Y2 (Nm) | | | | | | |
| A1 | SUS316L | 25 | Microporous film | 15 | Microporous film | 25 | 40 | 1.6 | SUS304 | Round columnar | 1/3 | 133.3 |
| A2 | SUS304 | 25 | Microporous film | 15 | Microporous film | 25 | 40 | 1.6 | SUS304 | Round columnar | 1/3 | 134.7 |
| A3 | SUS304 | 25 | Microporous film | 40 | - | - | 40 | 1.6 | SUS304 | Round columnar | 1/3 | 134.7 |
| A4 | Oxygen-free copper | 25 | Microporous film | 15 | Microporous film | 25 | 40 | 1.6 | SUS304 | Round columnar | 1/3 | 134.7 |
| A5 | SUS316L | 25 | Microporous film | 20 | Microporous film | 30 | 50 | 2.0 | SUS304 | Round columnar | 1/3 | 140.0 |
| A6 | SUS316L | 25 | Microporous film | 30 | Microporous film | 30 | 60 | 2.4 | SUS304 | Round columnar | 1/3 | 146.7 |
| A7 | SUS316L | 25 | Microporous film | 30 | Non-woven fabric | 30 | 60 | 2.4 | SUS304 | Round columnar | 1/3 | 145.3 |
| A8 | SUS316L | 25 | Microporous film | 30 | Microporous film | 30 | 60 | 2.4 | SUS304 | Cylindrical | 1/3 | 150.7 |
| A9 | SUS316L | 25 | Microporous film | 30 | Microporous film | 30 | 60 | 2.4 | PP | Cylindrical | 1/3 | 150.7 |
| A10 | SUS316L | 25 | Microporous film | 30 | Microporous film | 30 | 60 | 2.4 | SUS304 | Cylindrical | 1/5 | 160.0 |
| A11 | SUS316L | 25 | Microporous film | 30 | (Protrusion on first substrate) | 30 | 60 | 2.4 | SUS304 | Cylindrical | 1/5 | 160.0 |
| A12 | SUS316L | 25 | Microporous film | 30 | (Protrusion on positive electrode) | 30 | 60 | 2.4 | SUS304 | Cylindrical | 1/5 | 160.0 |
| A13 | SUS304 | 25 | Microporous film | 80 | - | - | 80 | 3.2 | SUS304 | Round columnar | 1/5 | 160.0 |

**[Table 2]**

| Lithium secondary battery | Negative electrode | | Separator | | | | Inter-electrode distance Y (Y1+Y2) (Nm) | Y/X | Core member | | Outer diameter ratio D1/D2 | Cycle capacity retention rate (index) |
|---|---|---|---|---|---|---|---|---|---|---|---|---|
| | Material of negative electrode current collector | Thickness X of Li deposited during charging (pm) | First substrate (negative electrode side) | | Second substrate (positive electrode side) | | | | Material | Shape | | |
| | | | Type | Thickness Y1 (Nm) | Type | Thickness Y2 (Nm) | | | | | | |
| B1 | Electrodeposited copper | 25 | Microporous film | 30 | Microporous film | 30 | 60 | 2.4 | - | - | - | 100 |
| B2 | Electrodeposited copper | 25 | Microporous film | 15 | Microporous film | 25 | 40 | 1.6 | SUS304 | Round columnar | 1/3 | 106.7 |
| B3 | Electrodeposited copper | 25 | Microporous film | 30 | Microporous film | 30 | 60 | 2.4 | SUS304 | Cylindrical | 1/5 | 109.3 |
| B4 | SUS316L | 25 | Microporous film | 30 | Microporous film | 30 | 60 | 2.4 | - | | | 120.0 |
| B5 | SUS316L | 25 | Microporous film | 15 | - | - | 15 | 0.6 | - | | | 113.3 |

The batteries A1 to A13 had higher capacity retention rates than the batteries B1 to B5.

The capacity retention rate of the battery B3 produced using the electrode group including the core member increased by about 9% compared with the capacity retention rate of the battery B1 produced using the electrode group having the hollow part (B1→B3). The capacity retention rate of the battery B4 produced using the foil made of SUS316 as the negative electrode current collector increased by about 20% compared with the capacity retention rate of the battery B1 produced using the electrodeposited copper foil as the negative electrode current collector (B1→B4).

On the other hand, the capacity retention rate of the battery A10 produced using the foil made of SUS316 as the negative electrode current collector and the electrode group including the core member significantly increased by 60% compared with the capacity retention rate of the battery B1 (B1→A10).

### [Industrial Applicability]

The lithium secondary battery according to the present disclosure is applicable to electronic devices such as cellular phones, smart phones, and tablet terminals, electric vehicles, hybrid vehicles, plug-in hybrids, and home storage batteries.

Although currently preferred embodiments of the present invention are described, the disclosure should not be construed as limiting the present invention. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

### [Reference Signs List]

10: lithium secondary battery, 11: positive electrode; 12: negative electrode, 13: separator, 13A: first substrate, 13B: second substrate, 13C: line-shaped protrusions, 14: electrode group, 15: battery can, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 28: space, 29: core member, 100, 600: positive electrode composite body, 200, 400: negative electrode composite body, 300, 500, 700: positive and negative electrode stack

## Claims

1. A lithium secondary battery comprising:
a wound electrode group including a positive electrode, a negative electrode including a negative electrode current collector, and a separator disposed between the positive electrode and the negative electrode;
a core member disposed in a hollow part of the electrode group; and
a non-aqueous electrolyte having lithium ion conductivity,
wherein lithium metal is deposited on the negative electrode when the battery is charged, and the lithium metal dissolves when the battery is discharged, and
the negative electrode current collector is an austenitic stainless steel foil or an oxygen-free copper foil.

2. The lithium secondary battery according to claim 1,
wherein a thickness X of lithium metal deposited on the negative electrode when the battery is charged and a distance Y between the positive electrode and the negative electrode when the battery is discharged satisfy a relationship: Y/X>1.5.

3. The lithium secondary battery according to claim 1 or 2,
wherein the separator includes at least one substrate selected from the group consisting of a microporous sheet and a nonwoven sheet.

4. The lithium secondary battery according to claim 3,
wherein the separator is constituted by a plurality of the substrates.

5. The lithium secondary battery according to claim 1 or 2,
wherein the separator includes a microporous sheet and a heat-resistant layer provided on at least one surface of the microporous sheet, and
the heat-resistant layer is disposed between the microporous sheet and at least one of the positive electrode and the negative electrode in the electrode group.

6. The lithium secondary battery according to claim 1 or 2,
wherein the separator is constituted by a stack including a substrate and a protrusion, and
a space is provided between the substrate and at least one of the positive electrode and the negative electrode by the protrusion.

7. The lithium secondary battery according to any one of claims 1 to 6,
wherein the core member is fixed to an end portion of the electrode group from which the electrode group is wound.

8. The lithium secondary battery according to any one of claims 1 to 7,
wherein the core member is made of a metal material or a resin material.

9. The lithium secondary battery according to any one of claims 1 to 8,
wherein the core member has a cylindrical shape.

10. The lithium secondary battery according to any one of claims 1 to 9,
wherein an outer diameter D 1 of the core member and an outer diameter D2 of the electrode group when the battery is discharged satisfy a relationship: D1/D2≤1/4.
